## Europäisches Patentamt
## European Patent Office
## Office européen des brevets

(19)

(11) Publication number: **0 238 116**
**A1**

(12)

# EUROPEAN PATENT APPLICATION

(21) Application number: **87200257.1**

(22) Date of filing: **18.02.87**

(51) Int. Cl.³: **G 11 B 5/70**
**G 11 B 5/702**

(30) Priority: **20.02.86 NL 8600421**

(43) Date of publication of application:
**23.09.87 Bulletin 87/39**

(84) Designated Contracting States:
**BE DE FR GB IT NL**

(71) Applicant: **PD Magnetics B.V.**
**Molenstraat 37**
**NL-4902 NM Oosterhout(NL)**

(72) Inventor: **Huisman, Hendrikus Frederikus**
**c/o Int. Octrooibureau B.V. Prof. Holstlaan 6**
**NL-5656 AA Eindhoven(NL)**

(74) Representative: **Weening, Cornelis et al,**
**INTERNATIONAAL OCTROOIBUREAU B.V. Prof.**
**Holstlaan 6**
**NL-5656 AA Eindhoven(NL)**

(54) **Magnetic recording element.**

(57) Magnetic recording element having a carrier and a magnetic coating provided thereon which comprises a magnetic pigment, a polyester urethane binder and a dispersing agent, the dispersing agent being a polyester urethane having a molecular weight of approximately 1,000–10,000 in a quantity by weight of 1–10% calculated on the pigment.

Magnetic recording element.

The invention relates to a magnetic recording element which comprises a carrier and a magnetic coating provided thereon which has a polyester urethane binder, a magnetic pigment and a dispersing agent, the pigment being finely distributed in the binder under the influence of the dispersing agent.

The recording element is used for recording audio and/or video information. The element may take the form of a disc or plate but it preferably has the form of a tape.

The carrier is usually manufactured from a synthetic resin, for example, polyester or polyvinyl chloride but it may also consist of, for example, paper or metal.

The magnetic pigment comprises the usual ferromagnetic particles, for example, Fe particles, $CrO_2$ particles or $\alpha$-$Fe_2O_3$ particles which optionaly are doped with other elements, for example, Co, Ni, Zn, Sn or Ti.

In order to be able to readily disperse the pigment particles in the binder and, for example, to prevent or decompose the formation of agglomerates of particles, dispersing agents are used. A great variety of dispersing agents is used for this purpose. Frequently used dispersing agents are, by way of example, lecithine, mono- or diesters of phosphoric acid and alcohols which may be ethoxylated, alkylarylsulphonic acids, salts of fatty acids and polar groups comprising aliphatic amines, for example, bis (2-hydroxyethyl) octadecylamine.

All the said dispersing agents have in common that a polar section is present in the molecule, for example, a sulphonic acid group, a carboxyl group or a hydroxyl group, as well as a non-polar part, for example, an aliphatic hydrocarbon group with, for example, 12-20 carbon atoms. The molecular weight of the dispersing agents is comparatively low and usually is smaller than 500.

With the polar group the molecules of the dispersing agents are adsorbed at the surface of the pigment particle, which surface is also polar. The non-polar group of the molecules of the dispersing agent thus adsorbed screen the particle so that the particles do not form agglomerates and are readily dispersed in the binder.

Applicants have found that due to the screening of the pigment particles by the non-polar groups of the dispersing agents a good dispersion is obtained, it is true, but that on the other hand said non-polar groups are the cause that no interaction with the binder takes place. This means that the pigment particles are loose in the binder. This in turn has for its result that the mechanical properties of the magnetic recording element, for example, the modulus of elasticity and the tensile strength, are not optimum.

It is an object of the invention to provide, on the basis of the above-mentioned recognition, a magnetic recording element which shows improved mechanical properties whilst the magnetic properties are maintained.

A more particular object is to provide a recording element which has a greater elasticity, a greater tensile strength, and a considerably improved resistance to detrition.

This object is achieved by means of a recording element of the type mentioned in the opening paragraph which is characterized in that the dispersing agent is a polyester urethane having a molecular weight of approximately 1000-10.000, in a quantity of 1-10 % by weight calculated on the pigment.

The molecules of the dispersing agent used according to the invention comprise terminal carboxyl groups and hydroxyl groups and are hence sufficiently polar to be adsorbed on the surface of the pigment particle. The non-adsorbed part of the molecule is a polyester urethane chain which has the same structure as the binder. Only the chain length is smaller. This part of the molecule of the dispersing agent shows a strong interaction with the binder because it concerns the same molecular construction. The result is that the pigment particles are fixed in the binder matrix.

The dispersing agent according to the invention can be manufactured in the same manner as the polyester urethane binder, with the difference that the polymerization reaction used is discontinued as soon as the polyester urethane has reached a molecular weight between approximately 1,000 and 10,000. If desired, extra terminal hydroxyl groups or carboxyl groups may be provided. As is sufficiently known, polyester urethane which often in literature is briefly referred to as polyurethane, is manufactured by reacting a polyester with terminal hydroxyl groups with an aliphatic or aromatic diisocyanate, preferably with the addition of a primary or secundary alcohol as a chain extender. The polyester in itself is the reaction product of a diol (difunctional alcohol) for example, 1,4 butanediol with a dicarbonxylic acid, for example, adipnic acid or azelaic acid or mixtures thereof. The diisocyanate used is, for example, tetramethylene diisocyanate or hexamethylene diisocyanate. 4,4-Diphenylmethane diisocyanate is preferably used. An example of a suitable chain extender is 1,4 butanediol. Reference may be made to United States Patent Specification 4,525,424 and German Patent Specification 3,124,199.

In a preferred form of the magnetic recording element according to the invention a dispersing agent of polyester urethane is used which has been obtained by decomposing polyester urethane with a higher molecular weight of approximately 50,000-150,000 in an organic medium to the desired molecular weight of 1,000-10,000 by means of a treatment with an acid or base succeeded by neutralization.

The polyester urethane starting product with high molecular weight is a conventional binder which is commercially available, for example, under the tradename of Estane. When treated with an acid or base, chain interruption occurs and that in the polyester part of the polyester urethane molecule, a $-O-\overset{|}{C}=O$ bond being interrupted while forming two radicals, one radical having a terminal carboxyl group and the other radical having a terminal hydroxyl group. The chain decomposition is carried out in an organic solvent, for example, tetrahydrofuran, cyclohexanone or methylisobutyl ketone. As soon as the desired chain length is reached, the reaction is discontinued by neutralization of the reaction medium. An acid reaction medium, for example, a hydrochloric acid reaction medium, is neutralized by the addition of a base, notably NaOH. An alkaline reaction medium is neutralized with an acid, for example hydrochloric acid. Upon neutralization a salt is formed, for example NaCl, which does not dissolve in the reaction medium and is filtered of.

In a further favourable embodiment of the magnetic recording element in accordance with the invention the magnetic coating also comprises a wetting agent in a quantity of at most 1 % by weight calculated on the quantity of pigment. An example of a suitable wetting agent is an aliphatic sulphonate, for example, Na-dodecylsulphonate. The wetting agent causes the air adsorbed in the mixture to disappear easily during the preparation of the magnetic coating in which the pigment is mixed with the binder and a solvent for the binder.

The particles of the magnetic pigment are generally acicular and have a lenght of 0.1 - 1μ and a thickness of 0.01 - 0.2μ.

In addition to the magnetic particles and the dispersing agent, other auxiliary substances may be dissolved or dispersed in the binder, for example, a lubricant. Suitable lubricants are, for example, oleic acid, mineral oils, fatty acid amides or mixtures thereof.

The preparation of the recording medium may be carried out in a conventional manner, for example, by suddenly mixing the magnetic particles, the dispersing agent, the auxiliary substances and the part of the binder by means of a ball mill and a solvent for the binder. The remainder of the binder dissolved in a suitable solvent and optionally provided with auxiliary substances is then added and the whole is further ground in the ball mill for a few hours. Organic liquids, for example esters, for example ethyl acetate, ethers, for example, tetrahydrofuran and ketones, for example, cyclohexanone, methylisobutyl ketone, may be used as solvents for the binder.

After the dispersion has been thoroughly ground in the ball mill, the larger magnetisable particles optionally present are sieved and the mixture is provided on the carrier in a uniform layer. As already noted hereinbefore the carrier may be in the form of a tape, plate, disc, and the like and, dependent on the material from which the carrier has been manufactured, may optionally be provided with a suitable bonding layer for the recording medium to be provided on the carrier. In addition to the bonding layer, other layers, for example an antistatic layer, may be provided. The assembly is then dried, the solvent evaporating and a recording layer having a thickness of from 2 to 10μ remaining on the carrier.

This layer of recording medium may optionally be cured to promote the resistance to detrition and may moreover be subjected to a calendering process in which the surface of the layer becomes smoother.

The invention will now be described in greater detail with reference to the ensuing specific example.

Example

Manufacture of a video tape

A magnetic coating layer was manufactured by mixing in a ball mill having 600 glass balls the following constituents :

100 parts by weight of chromium dioxide

3.5 parts by weight of polyester urethane having a molecular weight of 1,000-10,000 obtained by chain termination and added as a 16 % solution in tetrahydrofuran (dispersing agent)

0.5 parts by weight of sodium dodecyl sulphonate (wetting agent)

17 parts by weight of polyester urethane having a molecular weight of 50,000-150,000 (binder), added as a 16 % solution in tetrahydrofuran

1 part by weight of butyl stearate (lubricant)

0.3 parts by weight of zinc stearate (lubricant)

0.05 parts by weight of stearamide (lubricant)

3 parts by weight of isocyanate hardener

80 parts by weight of tetrahydrofuran

60 parts by weight of methyl isobutyl ketone

100 parts by weight of cyclohexanone.

The mixture is mixed for a few hours, then filtered and provided as a layer on a polyester foil in a thickness of 15μm. After drying and calendering the layer thickness of the coating layer (magnetic recording medium) of the resulting video tape was 2.5μm.

In a corresponding manner a comparative video tape was manufactured with the difference that as a dispersing agent 2 parts by weight of bis (2-hydroxyethyl) octadecylamine and 1.5 parts by weight of stearic acid were used.

The mechanical and magnetic properties of the two tapes have been tested according to the standards applying for this purpose. The results are recorded in the table below. The following mechanical properties have been measured: the modulus of elasticity ($\mathcal{E}$); the maximum tensile strength in the elastic area of the tape ($\sigma_e$); the tensile force upon fracture ($\sigma_b$); the maximum elongation of the tape in the elastic range ($\sum_e$) and upon fracture ($\sum_b$). The measured magnetic properties are the S/N luminance which is the signal-to-noise ratio of the brightness signal relatively with respect to a reference tape measured at a frequency of 4.3 MHz; the S/N Chroma which is the signal-to-noise ratio of the colour signal measured relatively with respect to a reference tape at the output of the recorder; the RF output which is the voltage value of the brightness signal measured at both 3 MHz and 5 MHz.

TABLE

| mechanical properties | tape according to the invention | standard tape |
|---|---|---|
| modulus of elasticity $\mathcal{E}$ | 14000 N/mm$^2$ | 7500 N/mm$^2$ |
| tensile force elastic $\sigma_e$ | 7.9 N/mm$^2$ | 5.5 N/mm$^2$ |
| tensile force fracture $\sigma_b$ | 14.9 N/mm$^2$ | 11.0 N/mm$^2$ |
| elongation elastic $\Sigma_e$ | 0.35 % | 0.19 % |
| elongation at fracture $\Sigma_b$ | 5.5 % | 2.2 % |

magnetic properties

| | | |
|---|---|---|
| S/N luminance | + 0.9 dB | 1.0 dB |
| S/N chroma | + 3.1 dB | 2.9 dB |
| RF output 3 MHz | + 3.6 dB | 3.8 dB |
| RF output 5 MHz | + 2.7 dB | 3.3 dB |

From the data recorded in the table it appears that the magnetic tape according to the invention has considerably improved mechanical properties while the quality of the magnetic properties is maintained.

# CLAIMS

1.      A magnetic recording element which comprises a carrier and a magnetic coating provided thereon which has a polyester urethane binder, a magnetic pigment and a dispersing agent, the pigment being finely distributed in the binder under the influence of the dispersing agent, characterized in that the dispersing agent is a polyester urethane having a molecular weight of approximately 1,000-10,000 in a quantity of 1-10 % by weight calculated on the pigment.

2.      A magnetic recording element as claimed in Claim 1, characterized in that the dispersing agent has been obtained by decomposing polyester urethane having a higher molecular weight of approximately 50,000-150,000 in an organic medium to the desired molecular weight of 1,000-10,000 by means of a treatment with an acid or a base succeeded by neutralization.

3.      A magnetic recording element as claimed in Claim 1 or 2, characterized in that the magnetic coating also comprises a wetting agent in a quantity of at most 1 % by weight calculated on the pigment.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 017 834 (AGFA GEVAERT AG) * Claim 1; page 8, lines 3-14; page 9, line 11 * | 1 | G 11 B 5/70 G 11 B 5/702 |
| A | PATENT ABSTRACTS OF JAPAN, vol. 6, no. 262 (P-164)[1140], 21st December 1982; & JP-A-57 158 023 (HITACHI MAXELL K.K.) 29-09-1982 | 1 | |
| A | US-A-4 525 424 (R. BRADSHAW) * Claims 1,5 * | 1 | |
| A | EP-A-0 085 722 (SONY CORP.) * Claims 1-3 * | 1 | |

TECHNICAL FIELDS SEARCHED (Int. Cl.4)

G 11 B
C 08 L

The present search report has been drawn up for all claims

| Place of search | Date of completion of the search | Examiner |
|---|---|---|
| THE HAGUE | 09-06-1987 | VITZTHUM N.A. |

EPO Form 1503 03 82